# EUROPÄISCHE PATENTSCHRIFT

(11) **EP 1 098 846 B1**
(45) Veröffentlichungstag und Bekanntmachung des Hinweises auf die Patenterteilung: **29.12.2004**
(21) Anmeldenummer: 00934984.6
(22) Anmeldetag: 05.05.2000
(51) Int. Cl.: C01B 33/18, C03C 1/02, C03B 19/10, B01J 8/18

(54) **VERFAHREN ZUM REINIGEN VON SIO2-PARTIKELN UND VORRICHTUNG ZUR DURCHFÜHRUNG DES VERFAHRENS**
METHOD FOR PURIFYING SiO2-PARTICLES AND DEVICE FOR CARRYING OUT SAID METHOD
PROCEDE DE PURIFICATION DE PARTICULES DE SiO2 ET DISPOSITIF DE MISE EN OEUVRE DUDIT PROCEDE

(30) Priorität: 07.05.1999 DE 19921059
(43) Veröffentlichungstag der Anmeldung: 16.05.2001
(73) Patentinhaber: Heraeus Quarzglas GmbH & Co. KG, 63450 Hanau (DE)
(72) Erfinder: BECKER, Jörg, D-61194 Niddatal (DE); NOWAK, Joachim, D-61130 Nidderau (DE)
(86) Internationale Anmeldenummer: PCT/EP2000/004049
(87) Internationale Veröffentlichungsnummer: WO 2000/068147

(56) Entgegenhaltungen:
- EP-A- 0 440 893
- EP-A- 0 901 989
- BE-A- 366 384
- BE-A- 671 691
- DD-A- 144 868
- DE-A- 3 836 934
- DE-A- 19 813 971
- US-A- 2 233 155
- US-A- 4 983 370
- PATENT ABSTRACTS OF JAPAN vol. 014, no. 242 (C-0721), 23. Mai 1990 (1990-05-23) & JP 02 064027 A (SHIN ETSU CHEM CO LTD), 5. März 1990 (1990-03-05)
- PATENT ABSTRACTS OF JAPAN vol. 004, no. 026 (C-001), 6. März 1980 (1980-03-06) & JP 55 003353 A (NIPPON TELEGR & TELEPH CORP), 11. Januar 1980 (1980-01-11)

## Beschreibung

Die Erfindung betrifft ein Verfahren zum Reinigen von SiO₂-Partikeln, indem eine Schüttung der Partikel in einem Reaktor mit vertikal orientierter Mittelachse erhitzt und dabei einem chlorhaltigen Behandlungsgas ausgesetzt wird, das mit einer vorgegebenen Strömungsgeschwindigkeit von unten durch eine Gasdusche hindurch nach oben durch den Reaktor und die Schüttung in Form eines laminaren Gasstromes geleitet wird und wobei eine Behandlungstemperatur von mindestens 1000°C eingestellt wird.

Weiterhin betrifft die Erfindung eine Vorrichtung zur Durchführung des erfindungsgemäßen Verfahrens, umfassend einen Reaktor mit vertikal orientierter Mittelachse für die Aufnahme einer Schüttung zu reinigender SiO₂-Partikel, mit einer Gaszuführung für die Zufuhr eines Behandlungsgases in einen Bereich des Reaktors unterhalb der Schüttung und mit einer Gasableitung für die Ableitung des Behandlungsgases aus einem Bereich des Reaktors oberhalb der Schüttung.

Aus SiO₂-Partikeln werden Quarzglasprodukte für die chemische und optische Industrie und für die Lichtwellenleiter- und Halbleiterfertigung erschmolzen. An die Reinheit der Quarzglasprodukte werden hohe Anforderungen gestellt. Insbesondere Alkalimetalle, Erdalkalimetalle, Schwermetalle, Eisen, Kohlenstoff und freies oder gebundenes Wasser können sich schädlich auf die gewünschten Eigenschaften der Quarzglasprodukte auswirken. Dementsprechend hoch sind auch die Reinheitsanforderungen an die Rohstoffe für die Quarzglasprodukte. Bei den Quarzglas-Rohstoffen im Sinne dieser Erfindung handelt es sich um amorphe oder kristalline Partikel, beispielsweise um SiO₂-Partikel aus natürlich vorkommendem Quarz, um verunreinigte synthetisch hergestellte Körnung, Granulate, oder um Recyclingmaterial.

Ein Verfahren zur kontinuierlichen Reinigung von Quarzpulver durch Thermochlorierung ist in der EP-A1 737 653 beschrieben. Darin wird vorgeschlagen, das zu reinigende Quarzpulver, das eine mittlere Korngröße im Bereich von 106 µm bis 250 µm aufweist, kontinuierlich einem elektrisch beheizten Drehrohrofen aus Quarzglas zuzuführen, in dem es nacheinander eine Vorheizkammer, eine Reaktionskammer und eine Gas-Desorptionskammer durchläuft. In der Vorheizkammer wird das Quarzpulver auf ca. 800 °C erwärmt, und anschließend in der Reaktionskammer bei einer Temperatur um 1300 °C mit einem Gasgemisch aus Chlor und Chlocwasserstoff behandelt. Dabei reagieren Alkali- und Erdalkaliverunreinigungen des Quarzpulvers mit dem chlorhaltigen Gasgemisch unter Bildung gasförmiger Metallchloride. Das Behandlungsgas und die gasförmigen Reaktionsprodukte werden anschließend abgesaugt.

Das bekannte Reinigungsverfahren führt zu einer deutlichen Reduzierung an Alkali- und Erdalkaliverunreinigungen im Quarzpulver. Durch mehrmaliges Durchlaufen des Reinigungsprozesses lässt sich die Reinheit des Quarzpulvers noch verbessern. Bei vielen Anwendungen des Quarzpulvers, beispielsweise als Ausgangsmaterial für Quarzglasbauteile zum Einsatz bei der Halbleiterherstellung oder für die Optik, werden an die Reinheit der Ausgangsmaterialien jedoch besonders hohe Anforderungen gestellt, die mit dem bekannten Verfahren nicht oder nur unter großem Zeit-, Material- und Kostenaufwand zu erreichen sind.

Der Reinigungseffekt hängt bei dem bekannten Verfahren von der Reaktionsdauer des Quarzpulvers mit dem chlorhaltigen Gasgemisch und von der Reaktionstemperatur ab. Bei höheren Temperaturen reagiert Chlor schneller mit den metallischen Verunreinigungen ab, so dass mit steigender Temperatur ein besserer Reinigungseffekt zu erwarten wäre. Allerdings bilden sich bei hohen Temperaturen aufgrund des Erweichens der Körnung Agglomerate, die den weiteren Zutritt des Behandlungsgases zur Oberfläche der einzelnen Kömer erschweren. Der Reinigungseffekt durch das Behandlungsgas, das in erster Linie an der Oberfläche der Körnung wirkt, wird dadurch verringert. Weiterhin hängt der Reinigungseffekt von der Verweilzeit des Quarzpulvers in der Reaktionskammer ab. Grobkörniges Pulver durchläuft die Reaktionskammer üblicherweise schneller als feinkörniges Pulver. Dadurch können sich unterschiedliche Reinheiten ergeben, die sogar innerhalb einer Charge, je nach Temperatur, Kornfraktion oder Durchsatz unterschiedlich sein können. Dies erschwert die Reproduzierbarkeit des bekannten Reinigungsverfahrens.

Beim dem Reinigungsverfahren gemäß der DD-PS 144 868 wird rieselfähiger Quarzsand einem vertikal orientierten Reaktor kontinuierlich von oben zugeführt. Die Quarzsand-Schüttung durchwandert den Reaktor kontinuierlich von oben nach unten. Dabei durchläuft die Quarzsand-Schüttung eine Aufwärmzone, eine Thermochlorierzone und eine Abkühlzone. Um das Eindringen von Sauerstoff in die Chlorierzone zu verhindern und damit die Rückbildung der beim Chlorieren entstandenen Chloride in Metalloxide zu verhindern, wird am Eingangsbereich und am Ausgangsbereich der Chlorierzone ein Gasvorhang aus einem Inertgas oder aus Stickstoff erzeugt.

Zur Beseitigung von Verunreinigungen an der Oberfläche von natürlich vorkommendem Quarzsand sind auch nasschemische Vorbehandlungen üblich. Bei einem solchen Verfahren, wie es beispielsweise in der US-A 4,983,370 beschrieben ist, wird der Quarzsand vor dem Reinigungsprozess durch Thermochlorierung zunächst mittels einer zweistufigen Flotation, einem Magnetabscheider und anschließend einer Ätzbehandlung in Flußsäure vorbehandelt.

Ein Reinigungsverfahren und eine Vorrichtung zur Durchführung des Verfahrens gemäß der eingangs genannten Gattung sind aus der EP-A1 709 340 bekannt. Dort wird vorgeschlagen, mittels Flammenhydrolyse hergestelltes SiO₂-Pulver zur Entfernung von Chlor kontinuierlich einem vertikal orientierten Reaktor zuzuführen und die Pulver-Schüttung im Gegenstrom mit einem Gasgemisch aus Wasserdampf und Luft zu behandeln, das durch den Reaktor von unten nach oben geleitet wird. Das Gasgemisch hat im Bereich der Schüttung eine lineare Gasgeschwindigkeit im Bereich zwischen 1 und 10 cm/s und eine Temperatur im Bereich zwischen 250 °C und 600 °C. Die Schüttung wird durch den Gasstrom unter Bildung eines sogenannten "Fließbettes" durchströmt und dabei leicht angehoben.

Aus BE 671 691 ist weiterhin ein Reinigungsverfahren für eine Quarzglaskörnung mit Hilfe eines chlorhaltigen Behandlungsgases bekannt. Der Reinigungsprozess wird in einem Reaktor aus Stahl durchgeführt, was im Zusammenhang mit dem chlorhaltigen Behandlungsgas zu Korrosionserscheinungen am Reaktor führt, in deren Folge metallische Verunreinigungen in die Quarzglaskömung gelangen können. Gemäß der Offenbarung von BE 671 691 soll außerdem die Behandlungstemperatur nicht zu hoch gewählt werden, was jedoch die Reinigungseffizienz mit dem chlorhaltigen Behandlungsgas reduziert.

Es hat sich gezeigt, dass mittels der bekannten Verfahren der Reinheitsgrad der SiO₂-Partikel, wie er für einen Einsatz in der Halbleiter- und Lichtwellenleiterherstellung erforderlich ist, nicht erreicht wird. Besonders Verunreinigung mit den chemischen Elemente Li, Na, K, Mg, Cu, Fe, Ni, Cr, Mn, V, Ba, Pb, C, B und Zr sind mittels der bekannten Verfahren nicht hinreichend zu entfernen.

Der Erfindung liegt daher die Aufgabe zugrunde, ein verbessertes Verfahren für die Reinigung von SiO₂-Partikeln und eine dafür geeignete, einfache Vorrichtung bereitzustellen, sowie eine unter Einsatz des erfindungsgemäßen Verfahrens gereinigte SiO₂-Körnung aus natürlich vorkommendem Rohstoff anzugeben, die insbesondere für die Herstellung von Halbzeugen oder Endprodukten aus Quarzglas für die Halbleiter- und Lichtwellenleiterherstellung besonders geeignet ist.

Hinsichtlich des Verfahrens wird diese Aufgabe erfindungsgemäß dadurch gelöst, dass in einen aus Quarzglas bestehenden Reaktor das Behandlungsgas mittels einer unterhalb der Schüttung eine Vielzahl von lateral zur Mittelachse verteilten Düsenöffnungen aufweisenden Gasdusche aus Quarzglas in die Schüttung eingeleitet, die Strömungsgeschwindigkeit auf mindestens 10 cm/s eingestellt wird und die Partikel unter Luft- und Sauerstoffausschluß auf eine Temperatur im Bereich der Behandlungstemperatur erhitzt werden.

Es wird ein chlorhaltiges Behandlungsgas eingesetzt. Viele der in SiO₂-Partikeln enthaltenen Verunreinigungen reagieren mit dem Behandlungsgas bei Temperaturen oberhalb von 1000 °C zu gasförmigen Metallchloriden oder anderen flüchtigen Verbindungen, die über das Abgas aus dem Reaktor ausgetragen werden können. Außer einer chlorhaltigen Komponente kann das Behandlungsgas zusätzlich andere Komponenten enthalten, die zur Entfernung spezifischer Verunreinigungen oder zur Einstellung bestimmter Eigenschaften des SiO₂ oder des Wärmeübergangs zwischen Behandlungsgas und Partikeln besonders geeignet sind, wie beispielsweise Fluor, Jod oder Brom, Inertgase oder Wasserstoff. Aus wirtschaftlichen Gründen ist freies Chlor im Behandlungsgas unerwünscht, so daß die chlorhaltige Komponente Chlor in gebundener aber reaktionsfähiger Form enthält.

Das Behandlungsgas wird mit einer Strömungsgeschwindigkeit von mindestens 10 cm/s durch die Schüttung geleitet. Dadurch wird sichergestellt, dass die gasförmigen Verbindungen der Verunreinigungen möglichst schnell von den Partikeln entfernt und aus dem Reaktor ausgetragen werden. Darüberhinaus wird durch den raschen Gasaustausch den SiO₂-Partikeln kontinuierlich und schnell unverbrauchtes Behandlungsgas zugeführt, so dass der Umsatz der chemischen Reaktion zwischen Behandlungsgas und Verunreinigungen möglichst groß ist. Entscheidend hierfür ist die Strömungsgeschwindigkeit im Bereich der Schüttung. Dabei ist zu beachten, dass durch die Schüttung der freie Strömungsquerschnitt gegenüber dem leeren Reaktor verringert und dementsprechend die Strömungsgeschwindigkeit erhöht wird. Als "Schüttung" wird hier und im folgenden eine Aufschüttung der noch zu reinigender SiO₂-Partikel im Reaktor verstanden.

Reaktor und Gasdusche bestehen aus Quarzglas.

Im Bereich der Schüttung wird für das Behandlungsgas eine Behandlungstemperatur von mindestens 1000°C eingestellt. Die Verunreinigungen lassen sich im allgemeinen um so leichter und schneller aus den Partikeln entfernen, je höher die Behandlungstemperatur ist. Da die Verunreinigungen mit dem Behandlungsgas an der freien Oberfläche der Partikel reagieren, ist es erforderlich, dass die Verunreinigungen an die Oberfläche gelangen. Dies geschieht im wesentlichen durch Diffusion. Die Verunreinigungen weisen spezifische Diffusionsgeschwindigkeiten in der SiO₂-Partikel auf, grundsätzlich wird aber durch eine höhere Behandlungstemperatur auch eine höhere Diffusionsgeschwindigkeit erreicht. Durch die höhere Temperatur wird darüberhinaus die Reaktionsgeschwindigkeit zwischen Behandlungsgas und Verunreinigungen erhöht. Bei sehr hohen Behandlungstemperaturen besteht jedoch die Gefahr, dass die Partikel in der Schüttung agglomerieren, so dass die Rieselfähigkeit der Schüttung und infolge der geringeren freien Oberfläche auch die reinigende Wirkung des Behandlungsgases nachlässt. Im Hinblick hierauf ergibt sich eine Obergrenze für die Behandlungstemperatur um 1400 °C.

Das Behandlungsgas wird auf die Behandlungstemperatur eingestellt. Die SiO₂-Partikel werden durch das Behandlungsgas auf die Behandlungstemperatur aufgeheizt oder auf der Behandlungstemperatur gehalten. Die Temperatur des Behandlungsgases ist somit mindestens so hoch wie die der Partikel. Ein Auskondensieren gasförmiger Bestandteile aus dem Behandlungsgas und eine damit einhergehende Adsorption oder Absorption von Verunreinigungen auf bzw. in die Partikel wird dadurch verhindert.

Es ist notwendig, das Behandlungsgas mittels einer unterhalb der Schüttung eine Vielzahl von lateral zur Mittelachse verteilten Düsenöffnungen aufweisenden Gasdusche in die Schüttung einzuleiten. Die Gasdusche weist unterhalb der Schüttung der zu reinigenden Partikel Düsenöffnungen auf, die über den Querschnitt der Schüttung - in Strömungsrichtung gesehen - im wesentlichen symmetrisch verteilt sind und aus denen das Behandlungsgas ausströmt. Durch die am Anfang der Schüttung derartig flächig angelegte Gasströmung wird die Schüttung mehr oder weniger geradlinig, laminar durchströmt, und eine gleichmäßige und homogene Behandlung der Partikel über die gesamte Schüttung gewährleistet.

Die Partikel werden unter Luft- und Sauerstoffausschluss auf eine Temperatur im Bereich der Behandlungstemperatur erhitzt. Bei dieser Verfahrensweise wird in der Schüttung oder im Reaktor vorhandener Sauerstoff oder Luft vor dem Aufheizen der Partikel durch ein anderes Gas ersetzt, beispielsweise durch ein Inertgas oder durch ein Behandlungsgas, das - von Verunreinigungen. abgesehen - Sauerstoff- und Stickstoff-frei ist. Dadurch wird vermieden, dass sich bei höheren Temperaturen stabile Verbindungen von Verunreinigungen in Form von Nitriden oder Oxiden bilden, die durch das Behandlungsgas nachträglich nicht mehr entfernt werden können. Durch den Luft- und Sauerstoffausschluss wird außerdem eine Redox-Reaktion mit dem HClhaltigen Behandlungsgas unterdrückt, die zu Bildung von Chlorgas führen kann. Wie weiter unten erläutert, würde durch Chlorgas die Aufbereitung oder Entgiftung des Behandlungsgases wesentlich aufwendiger.

Das Verfahren ist sowohl für eine chargenweise als auch für eine kontinuierliche Reinigung der Partikel geeignet. Unter Berücksichtigung der spezifischen Reaktionstemperaturen für die Verunreinigungen an Li, Na, K, Mg, Cu, Fe, Ni, Cr, Mn, V, Ba, Pb, C, B und Zr liegen die mit dem erfindungsgemäßen Verfahren erzielbaren Reinheiten jeweils im sub-ppb-Bereich.

Als besonders günstig hat es sich erwiesen, im Bereich der Schüttung die Temperatur des Behandlungsgases auf mindestens 1200°C einzustellen. Je höher die Behandlungstemperatur im Bereich der Schüttung eingestellt wird, umso leichter und schneller lassen sich Verunreinigungen aus den oben näher erläuterten Gründen entfernen. Die Behandlungstemperatur, ab der eine merkliche Reaktion zwischen einem Verunreinigungselement und dem Behandlungsgas beobachtet wird (Reaktionstemperatur), ist elementspezifisch. So können beispielsweise Natrium-Verunreinigungen bereits bei Temperaturen von etwa 1000 °C mit dem chlorhaltigen Behandlungsgas deutlich reduziert werden, während für ein Entfernen von Lithium-Verunreinigungen höhere Temperaturen von mindestens 1050 °C günstiger sind.

Vorteilhafterweise wird das Behandlungsgas in die Schüttung derart eingeleitet, dass es diese unter Erzeugung einer fluidisierten Partikelschicht (Fließbett) anhebt. Die fluidisierte Partikelschicht wird vom Behandlungsgas weitgehend laminar durchströmt. Dadurch wird eine homogene Gasverteilung in der Schüttung erreicht, so dass die Partikel homogen mit dem Behandlungsgas beaufschlagt werden. Tote Winkel im Bereich der zu reinigenden SiO₂-Partikelschicht werden möglichst vermieden, so dass die Verunreinigungen vollständig und gleichmäßig abreagieren können. Dadurch wird eine möglichst vollständige und gleichmäßige Reinigungswirkung durch das Behandlungsgas erzielt. Darüberhinaus wird dadurch, dass die einzelnen Partikel der Schüttung im Fließbett in Bewegung gehalten werden, die Gefahr eines Ansinterns der Partikel verringert, so dass die Behandlungstemperatur höher eingestellt werden kann.

Es wird eine Verfahrensweise bevorzugt, bei der das Behandlungsgas vor Einleitung in die Schüttung auf die Behandlungstemperatur oder auf eine Temperatur oberhalb der Behandlungstemperatur erhitzt wird. Dabei dehnt sich das Behandlungsgas auf ein Mehrfaches seines Volumens bei Normaltemperatur aus. Mit der Volumenvergrößerung geht eine entsprechende Erhöhung der Strömungsgeschwindigkeit des Behandlungsgases einher. Dies erleichtert die Erzeugung einer fluidisierten Partikelschicht und einer weitgehend laminaren Strömung des Behandlungsgases durch die Schüttung. Darüberhinaus werden durch das Vorheizen des Behandlungsgases die oben erwähnten Kondensationseffekte vermieden. Durch den Kontakt mit der etwas kälteren SiO₂-Partikel stellt sich im Behandlungsgas die Behandlungstemperatur im Bereich der Schüttung ein.

Als besonders günstig hat es sich erwiesen, als Behandlungsgas - abgesehen von Inertgasenanorganisch reines Chlorwasserstoff-Gas einzusetzen. Insbesondere enthält ein derartiges Behandlungsgas möglichst wenig oxidierend wirkende Bestandteile, wie Sauerstoff, so dass eine Bildung von Chlor im Abgas des Behandlungsgases weitgehend vermieden werden kann. Dadurch erübrigt sich eine Chlorentgiftung des Abgases, so dass dessen Entsorgung oder Wiederverwertung vereinfacht wird. Beispielsweise können Gaswäscher entfallen, wie sie bei den bekannten Reinigungsverfahren zur Chlorentgiftung eingesetzt werden. Vorteilhafterweise enthält ein derartiges Chlorwasserstoff-Gas einen stöchiometrischen Überschuss an elementarem Wasserstoff. Der überschüssige Wasserstoff reagiert mit OH-Gruppen in den oder an den SiO₂-Partikeln zu Wasser, das als Wasserdampf mit dem Gasstrom ausgetragen wird, so dass der OH-Gehalt der Partikel verringert werden kann.

In einer bevorzugten Verfahrensweise wird das Behandlungsgas gleichzeitig zum Windsichten der Schüttung eingesetzt. Für viele Anwendungen ist die Entfernung des Feinanteils einer Körnung erwünscht, denn der Feinanteil kann beim Einschmelzen der Körnung zu einer Feinblasigkeit des Quarzglases führen. Durch Einstellen der Strömungsgeschwindigkeit des Behandlungsgases lässt sich dieser Feinanteil definiert aus der Schüttung entfernen und aus dem Reaktor heraustragen. Gleichzeitig lässt sich dadurch eine definierte Kornfraktion herstellen.

Vorteilhafterweise ist eine erste Reinigungsstufe zum Entfernen metallischer Verunreinigungen oder deren Verbindungen, insbesondere von Natrium-, Mangan-, Kalium- und Eisenverunreinigungen vorgesehen, und eine zweite Reinigungsstufe zum Entfernen von Kohlenstoff- und Kohlenstoffverbindungen. Während der zweiten Reinigungsstufe wird dem Behandlungsgas ein sauerstoffhaltiges Gas zugeführt, wogegen während der ersten Reinigungsstufe sauerstoffhaltiges Gas möglichst vermieden wird. Während der zweiten Reinigungsstufe reagiert Kohlenstoff, der beim Einschmelzen der Partikel zu Gaseinschlüssen führen kann, mit Sauerstoff zu CO oder CO₂ und wird aus der Schüttung entfernt.

Bei einer besonders wirtschaftlichen Verfahrensweise wird das Behandlungsgas im Umlauf geführt. Dabei wird das den Reaktor verlassende Abgas regeneriert und dem Reaktor als Behandlungsgas erneut zugeführt. Zum Ausgleich eines Gasverbrauches kann die Regeneration ein Zumischen von frischem, unverbrauchtem Behandlungsgas umfassen.

Als besonders günstig hat sich eine Verfahrensweise erwiesen, bei der die Strömungsgeschwindigkeit des Behandlungsgases auf mindestens 30 cm/s eingestellt wird. Durch die hohe Strömungsgeschwindigkeit wird der Gasaustausch vergrößert. Die oben näher erläuterten Vorteile hinsichtlich des Austrages von Verunreinigungen und hoher Reaktionsgeschwindigkeiten zwischen dem Behandlungsgas und den Verunreinigungen werden durch Aufrechterhaltung eines Fließbettes der Schüttung (fluidisierte Partikelschicht) weiter gefördert.

Hinsichtlich der Vorrichtung wird die oben angegebene Aufgabe erfindungsgemäß dadurch gelöst, dass der Reaktor aus Quarzglas besteht und allseitig geschlossen ist und dass die Gaszuführung eine Gasdusche aus Quarzglas umfasst, die unterhalb der Schüttung eine Vielzahl von lateral zur Mittelachse verteilten Düsenöffnungen zur Einleitung des Behandlungsgases in die Schüttung aufweist.

Dadurch, dass unterhalb der Schüttung eine Gasdusche angeordnet ist, kann eine laminare Strömung unterhalb der Schüttung erzeugt und das Behandlungsgas in Form einer möglichst laminaren Gasstromes in die Schüttung eingeleitet werden. Die Aufrechterhaltung einer möglichst laminaren Strömung innerhalb der Schüttung wird so erleichtert.

Die Gasdusche und der Reaktor selbst bestehen aus Quarzglas. Darüber hinaus ist der Reaktor allseitig verschließbar. Dadurch lässt sich ein Eintrag von Sauerstoff oder Stickstoff und die damit einhergehende Gefahr einer Bildung von Chlor sowie thermochemisch stabiler Verbindungen der Verunreinigungen, wie Nitriden oder Oxiden, vermindern.
Die Gasdusche weist eine Vielzahl von lateral zur Mittelachse verteilten Düsenöffnungen auf.
Die Düsenöffnungen sind über den Querschnitt der Schüttung - in Strömungsrichtung gesehen - im wesentlichen symmetrisch um die Mittelachse und gleichmäßig verteilt. Durch die am Anfang der Schüttung derartig flächig angelegte Gasströmung wird die Schüttung mehr oder weniger geradlinig, laminar durchströmt, und eine gleichmäßige und homogene Behandlung der Partikel über die gesamte Schüttung gewährleistet.

Vorteilhafterweise umfasst die Gaszuführung eine Gasaufheizvorrichtung, die - in Strömungsrichtung des Behandlungsgases gesehen - vor der Gasdusche angeordnet ist. Dadurch kann das Behandlungsgas vor Einleitung in die Schüttung auf eine Temperatur oberhalb der Behandlungstemperatur erhitzt werden. Die Wirkung und die besonderen Vorteile dieser Verfahrensweise sind oben anhand des erfindungsgemäßen Verfahrens näher erläutert.

Besonders einfach gestaltet sich eine Gasaufheizvorrichtung, die als beheizte Rohrwendel ausgebildet ist. Mittels der Rohrwendel lässt sich das Einstellen des Behandlungsgases auf die Behandlungsgtemperatur leicht realisieren, indem deren Länge den Erfordernissen angepasst wird. Die Länge der Rohrwendel liegt üblicherweise im Bereich einiger Meter. Sie kann in einem Ofen angeordnet sein, in dem sich auch der Reaktor befindet und sie besteht aus einem hochtemperaturstabilen Werkstoff, vorzugsweise aus Quarzglas.

Im einfachsten Fall ist die Gasdusche in Form eines mit den Düsenöffnungen versehenen Rohres ausgebildet. Das Rohr kann vielfältige Formen aufweisen, beispielsweise Spiralform. Die Gasdusche kann auch als perforierte Lochplatte oder Fritte ausgebildet sein.

Die Erzeugung einer laminaren Gasströmung wird erleichtert, wenn die Düsenöffnungen der Gasdusche symmetrisch um die Mittelachse des Reaktors verteilt sind. Beispielsweise können die Düsenöffnungen gleichmäßig um die Mittelachse in Ringform angeordnet sein, wobei benachbarte Düsenöffnungen vorteilhafterweise den gleichen Abstand zueinander haben.

Mit dem erfindungsgemäßen Verfahren wird eine SiO₂-Körnung aus natürlicher Quarzkörnung oder vorbehandelter Quarzkörnung, wie beispielsweise im Handel erhältlicher vorgereinigter Körnung oder aus Granulat, hergestellt bzw. gereinigt. Die so hergestellte natürliche SiO₂-Körnung zeichnet sich durch Reinheiten aus, die ansonsten nur mit synthetisch hergestelltem SiO₂ erreichbar sind. Sie ist besonders geeignet als Einsatzmaterial für die Herstellung von hochreinem Quarzglas. Beispielsweise für die Herstellung von Quarzglastiegeln, -stangen, -stäben, -barren, die als Bauteile oder Halbzeuge für die Halbleiterindustrie, für die Optik und die optische Nachrichtentechnik verwendet werden.

Nachfolgend wird die Erfindung anhand von Ausführungsbeispielen und einer Zeichnung näher erläutert, In der Zeichnung zeigen im einzelnen in schematischer Darstellung
- **Figur 1**: eine Ausführungsform der erfindungsgemäßen Vorrichtung, die für ein chargenweises Reinigungsverfahren gemäß der Erfindung geeignet ist, und
- **Figur 2**: eine Vorrichtung, die für ein kontinuierliches Reinigungsverfahren gemäß der Erfindung geeignet ist.

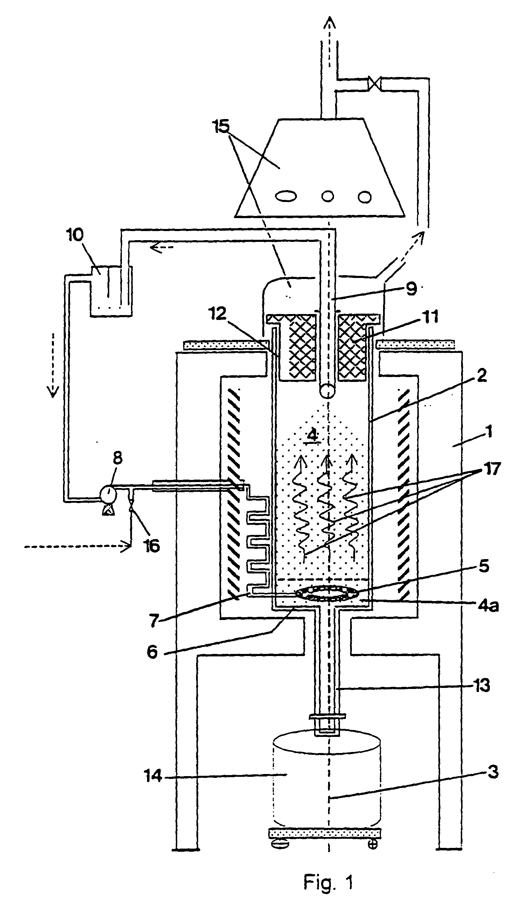

Bei der Vorrichtung gemäß Figur 1 ist innerhalb eines elektrisch beheizbaren Kammerofens 1 ein zylinderförmiger Reaktor 2 aus Quarzglas mit vertikal orientierter Mittelachse 3 angeordnet. Der Reaktor 2 hat einen Innendurchmesser von 14 cm und eine Höhe von etwa 150 cm. Er enthält eine Schüttung 4 aus rieselfähiger Quarzkömung. Im unteren Teil des Reaktors 2 ist eine Ringdusche 5 vorgesehen, die aus einem Quarzglasrohr gefertigt ist, das koaxial zur Mittelachse 3 am Boden 6 des Reaktors 2 angeordnet ist und das mit 100 Düsenöffnungen in Richtung der Reaktor-Unterseite versehen ist. Die Düsenöffnungen, die auf einem Hüllkreis mit einem Durchmesser von etwa 7 cm im Abstand von ca. 2,5 mm gleichmäßig verteilt sind, haben jeweils einen Durchmesser von 500 µm. Die Ringdusche 5 ist über eine 10 m lange Rohrwendel 7, die innerhalb des Kammerofens 1 jedoch außerhalb des Reaktors 2 angeordnet ist, mit einer Gasumwälzpumpe 8 verbunden. Mittels der Gasumwälzpumpe 8 wird über die Rohrwendel 7 und die Ringdusche 5 ein Behandlungsgas in den Reaktor 2 eingeleitet. Im oberen Teil des Reaktors 2 ist eine Abgasleitung 9 vorgesehen, die über einen Staubabscheider 10 mit der Gasumwälzpumpe 8 verbunden ist. Die Abgasleitung 9 erstreckt sich dabei durch eine Bohrung eines Quarzglasstempels 11, der den Reaktor 2 bis auf einen engen Ringspalt 12 zwischen Quarzstempel 11 und Abgasleitung 9 nach oben abdichtet. Am Boden 6 des Reaktors 2 ist ein verschließbarer Entnahmestutzen 13 für das chargenweise Ablassen gereinigter Quarzkömung in einen Behälter 14 angebracht. Oberhalb von Ofen 1 und Reaktor 2 ist ein Abzug 15 vorgesehen.

Nachfolgend wird das erfindungsgemäße Verfahren anhand von Ausführungsbeispielen und der Darstellung in Figur 1 näher erläutert.

### Beispiel 1:

Bei der gemäß Beispiel 1 zu reinigenden Quarzkömung handelt es sich um bereits vorgereinigte Körnung aus natürlich vorkommendem Quarzsand, der unter der Bezeichnung "IOTA Standard" im Handel erhältlich ist (Lieferant: Firma Unimin Corp., USA). Der mittlere Komdurchmesser beträgt bei dieser Quarzkömung etwa 230 µm, wobei der Feinanteil mit Komdurchmessem unterhalb von 63 µm bei etwa 1 bis 2 Gew.-% liegt. Die in dieser Quarzkömung gemessenen Verunreinigungen sind in Tabelle 1 in der Zeile "Standard" angegeben.

Auf einer Unterlage 4a vorab gereinigter Quarzkömung, wird eine Charge der zu reinigenden Quarzkörnung von etwa 16 kg in den Reaktor 2 zu einer lockeren Schüttung 4 eingefüllt, wobei sich für die Unterlage 4a und die Schüttung 4 eine Schütthöhe von etwa 60 cm ergibt. Die Oberkante der Unterlage 4a, deren Körnung die Ringdusche 5 gerade überdeckt, ist in Figur 1 anhand einer gestrichelten Linie dargestellt. Die Ringdusche 5 ist unterhalb der Schüttung 4 angeordnet. Während des Befüllens wird der Reaktor 2 mit einem Sauerstoff- und Stickstofffreien Gas gespült und anschließend mit dem Quarzglasstempel 11 verschlossen. Bei dem Spülgas handelt es sich in Beispiel 1 um anorganisch reines HCl-Gas mit einem stöchiometrischen Überschuss an Wasserstoff, das auch als Behandlungsgas zur Reinigung der Quarzkörnung während der folgenden ersten Reinigungsstufe eingesetzt wird. Durch die kontinuierliche Gasspülung wird bereits beim Befüllen des Reaktors 2 und insbesondere vor dem Aufheizen der Quarzkömung Sauerstoff und Stickstoff weitgehend ausgetrieben und ein Lufteintrag in den Reaktor 2 verhindert. Dadurch kann die Bildung thermisch und chemisch stabiler Verbindungen der zu entfernenden Verunreinigungen in Form von Metallnitriden oder Metalloxiden verhindert werden. Derartige temperaturstabile Metallnitride oder Metalloxide, die sich bei höheren Temperaturen beispielsweise durch chemische Reaktion, Phasenumwandlung oder durch sogenanntes Altem bilden, können direkt oder indirekt in Quarzglas zu unerwünschten Verunreinigungseffekten und zu störenden Verfärbungen oder Transmissionsänderungen führen. Als Beispiel hierfür seien Lithiumnitrid, Eisenoxid oder Mangandioxid genannt. Eine typische Verunreinigung der natürlichen Quarzkörnung ist Eisentrioxid, das in drei verschiedenen Modifikationen vorliegen kann. Eine davon ist das rotbraune, rhomboedrische α-Fe₂O₃. Es hat sich gezeigt, dass die Säurebeständigkeit und Härte von α-Fe₂O₃ entscheidend von seiner thermischen Vorbehandlung abhängt. Schwach geglühtes α-Fe₂O₃ löst sich leicht in Säuren und ist mit dem hier eingesetzten Behandlungsgas leicht zu entfernen. Bei Temperaturen oberhalb von 1000 °C geglühtes und dabei thermisch gealtertes α-Fe₂O₃ zeichnet sich hingegen durch hohe Säure-, Basen- und Chlorbeständigkeit aus und ist mit Behandlungsgas nicht mehr vollständig zu entfemen. Demzufolge wird bei dem erfindungsgemäßen Verfahren das nicht geglühte α-Fe₂O₃ bereits bei Temperaturen um 1000 C möglichst vollständig entfernt, indem die Schüttung 4 vom Befüllen des Reaktors 2 an und auch während des Aufheizens mit dem Behandlungsgas behandelt wird.

Eine weitere typische Verunreinigung in natürlichem Quarz ist Mangan, das im allgemeinen als Mangandioxid (MnO₂, Braunstein) vorliegt. MnO₂ geht beim Erhitzen an Luft oder unter Sauerstoff bei Temperaturen von über 550 °C in Mn₂O₃ über, das in seiner Alphaform (α-Mn₂O₃) als braun gefärbte Modifikation und nach einem Glühen bei einer Temperatur oberhalb von 900°C in das chemisch stabilere Trimangantetraoxid (Mn₃O₄) übergeht. Auch hier erweist es sich als vorteilhaft, schon beim Befüllen und Aufheizen des Reaktors 2 die Anwesenheit von Sauerstoff zu vermeiden.

Zum Aufheizen der Schüttung 4 wird der Kammerofen 1 auf die Behandlungstemperatur von 1270 °C eingestellt. Gleichzeitig wird über die Ringdusche 5 das Behandlungsgas bei einem Vordruck von 0,7 bar (bei Raumtemperatur) mit einer Flussrate von 1300 l/h in den Reaktor 2 eingeleitet. Das Behandlungsgas wird auf die Behandlungstemperatur vorgeheizt, indem es innerhalb der Rohrwendel 7 an den Heizelementen des Kammerofens 1 vorbeigeführt wird. Dabei vergrößert sich sein Volumen um ein Vielfaches. Für den leeren Reaktor 2 ergibt sich dabei rein rechnerisch für das Behandlungsgas eine Strömungsgeschwindigkeit von ca. 12 cm/s. Der aus der Ringdusche 5 austretende Gasstrom hebt die Schüttung 4 unter Bildung eines Fließbettes leicht an, wobei er sie weitgehend laminar - und bedingt durch die Verengung des freien Strömungsquerschnittes durch die Quarzkörnung - mit einer mittleren Strömungsgeschwindigkeit von etwa 60 cm/s durchströmt und gleichzeitig auf eine Temperatur um 1270 °C erhitzt.
Die im wesentlichen laminare Gasströmung wird durch die Richtungspfeile 17 angedeutet. Das Fließbett, die laminare Gasströmung 17 und die hohe Strömungsgeschwindigkeit des Behandlungsgases gewährleisten eine effektive, gleichmäßige thermische und chemische Behandlung der Quarzkörnung und damit eine optimale Reinigungswirkung und verhindern ein Ansintern der Körner untereinander. Durch das Vorheizen des Behandlungsgases werden Kondensationseffekte vermieden. Die hohe Strömungsgeschwindigkeit stellt einen raschen Gasaustausch und einen schnellen Austrag von Verunreinigungen weg vom einzelnen Korn und aus dem Reaktor 2 sicher. Darüberhinaus wird über den Gasstrom 17 - in Abhängigkeit von der eingestellten Strömungsgeschwindigkeit - der Feinanteil der Quarzkömung aus der Schüttung 4 als Feinststaub entfernt.

Das Behandlungsgas wird im Umlauf geführt und dabei regeneriert. Hierzu wird das mit Verunreinigungen und Feinststaub beladene Behandlungsgas über die Abgasleitung 9 aus dem Reaktor 2 ausgeleitet und dem Staubabscheider 10 zugeführt. Dabei kühlt das Behandlungsgas ab, so dass sich Volumen und dementsprechend die Strömungsgeschwindigkeit verringern, Im Staubabscheider 10 werden der Feinststaub und Verunreinigungen, die in Form auskondensierter Verbindungen vorliegen, entfernt. Anschließend wird das gereinigte Behandlungsgas über die Gaspumpe 8 wieder dem Reaktor 2 zugeführt. Dabei wird dem Behandlungsgas kontinuierlich eine geringe Menge an reinem HCl-Gas zugeführt, wie dies durch das Absperrventil 16 symbolisiert ist. Überschüssiges Behandlungsgas entweicht kontinuierlich aus dem Reaktor 2 durch den Ringspalt 12 und wird über den Abzug 15 entfernt. Ein Luft- und Sauerstoffeintrag in den Reaktor 2 wird so verhindert, so dass eine Oxidation von HCl unter Bildung von Chlorgas verhindert wird.

Nach einer Behandlungsdauer von 23 Stunden wird die Schüttung 4 von Kohlenstoff- und Kohlenstoffverbindungen befreit, indem dem Behandlungsgas kurzzeitig Sauerstoff beigemischt wird.

Die gereinigte Quarzkömung wird über den Stutzen 13 in den Behälter 4 abgelassen und kühlt ab. Bei der so behandelten Quarzkörnung liegen die Konzentrationen der Verunreinigungen an Li, Na, K, Mg, Cu, Fe, Ni, Cr, Mn, V, Ba, Pb, C, B und Zr jeweils im ppb-Bereich und zum Teil unterhalb der Nachweisgrenze der instrumentellen Ultra-Spuren-Analytik. Somit wird eine chemische Reinheit erreicht, die ansonsten nur von synthetisch hergestellter Körnung bekannt ist. Die an der erfindungsgemäß gereinigten Quarzkömung gemessenen Verunreinigungs-Gehalte sind in Tabelle 1 unter Bsp. 1 aufgeführt.

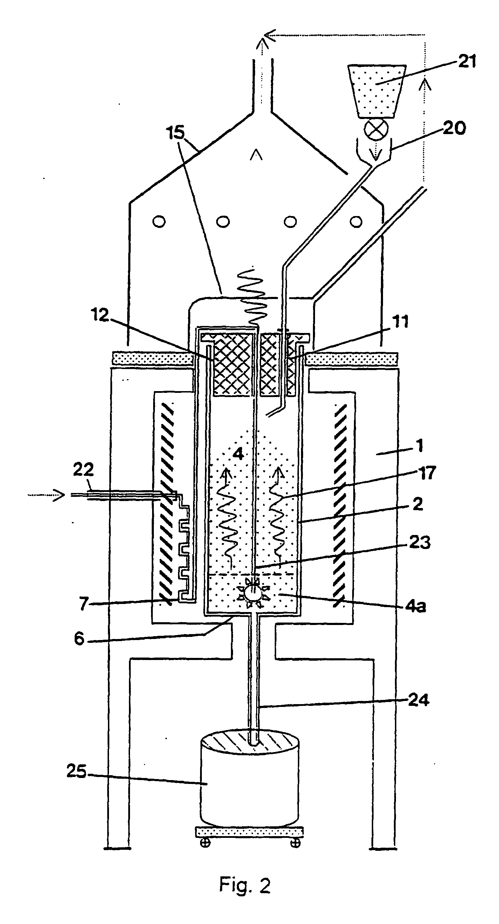

Bei der Darstellung in Figur 2 sind die gleichen Bezugsziffern wie in Figur 1 für die Bezeichnung der gleichen oder äquivalenter Bauteile oder Bestandteile der Vorrichtung verwendet. Auf die entsprechenden Erläuterungen zu Figur 1 wird hingewiesen.

Die in Figur 2 dargestellte Vorrichtung ist für eine kontinuierliche Betriebsweise des erfindungsgemäßen Verfahrens ausgelegt. Hierzu ist eine Einfüllvorrichtung 20 für die kontinuierliche Zufuhr rieselfähiger Quarzkömung 21 zu dem Reaktor 2 sowie ein Entnahmestutzen 24 am Boden 6 des Reaktors 2 vorgesehen, der nach unten in einen geschlossenen Behälter 25 mündet, so dass kontinuierlich gereinigte Quarzkömung aus dem Reaktor 2 in den Behälter 25 rieselt. Unterschiede zur Vorrichtung gemäß Figur 1 liegen auch in der Zufuhr des Behandlungsgases zum Reaktor 2 und in der Ableitung aus dem Reaktor 2. Über eine Gaszuleitung 22 und die Rohrwendel 7 wird das Behandlungsgas einem Quarzglasrohr 23 zugeführt, das von oben in die Schüttung 4 bis in den Bereich des Bodens 6 des Reaktors 2 hineinragt. Unterhalb des Quarzglasrohres 23 - durch eine gestrichelte Linie symbolisiert - befindet sich eine Unterlage 4a bereits gereinigter Quarzkörnung. Der untere Teil des Quarzglasrohres 23 ist über eine Länge von 10 mm mit mehreren, gleichmäßig um den Umfang verteilten Löchern perforiert, deren öffnungsquerschnitte zusammen etwa 4 mm² betragen. Aus den Löchern tritt das Behandlungsgas - wie durch das sternförmige Zeichen symbolisiert - axialsymmetrisch aus, wird in die zu reinigende Schüttung 4 eingeleitet, durchströmt diese von unten nach oben in Form eines möglichst laminaren Gasstromes 17, verlässt den Reaktor 2 durch die Bohrung des Quarzglasstempels 11 und wird danach abgesaugt.

Nachfolgend wird ein weiteres Ausführungsbeispiel für das erfindungsgemäße Verfahren anhand Figur 2 näher erläutert.

### Beispiel 2:

Bei der gemäß Beispiel 2 zu reinigenden Quarzkörnung 21 handelt es sich um die gleiche Körnung wie bei Beispiel 1. Mittels der Zufuhr-Vorrichtung werden ca. 16 kg der Quarzkömung 21 unter Bildung einer lockeren Schüttung 4 mit einer Schütthöhe von etwa 60 cm in den Reaktor 2 eingefüllt. Der Reaktor 2 wird dabei mit anorganisch reinem HCl-Gas mit einem stöchiometrischen überschuss an Wasserstoff, das auch als Behandlungsgas zur Reinigung der Quarzkörnung während der folgenden ersten Reinigungsstufe dient, gespült. Hinsichtlich der Wirkung dieser Spülung beim Befüllen des Reaktors 2 und insbesondere vor dem Aufheizen der Quarzkörnung 21 wird auf die entsprechenden Erläuterungen zu Beispiel 1 verwiesen.

Zum Aufheizen der Schüttung 4 wird der Kammerofen 1 auf die Behandlungstemperatur von 1270 °C eingestellt. Gleichzeitig wird über das Quarzglasrohr 23 das Behandlungsgas mit einer Flussrate von 1300 I/h in den Reaktor 2 eingeleitet. Das Behandlungsgas wird auf die Behandlungstemperatur vorgeheizt, indem es innerhalb der Rohrwendel 7 an den Heizelementen des Kammerofens 1 vorbeigeführt wird. Dabei vergrößert sich sein Volumen um ein Vielfaches. Der aus dem Quarzglasrohr 23 austretende Gasstrom 17 des Behandlungsgases hebt die Schüttung 4 unter Bildung eines Fließbettes leicht an, durchströmt die Schüttung 4 weitgehend laminar mit einer Strömungsgeschwindigkeit von etwa 60 cm/s und erhitzt die Quarzkömung dabei auf eine Temperatur um 1270 °C. Hinsichtlich der Wirkungen des Fließbettes und der laminaren Gasströmung 17 des Behandlungsgases wird ebenfalls auf die obigen Erläuterungen zu Beispiel 1 verwiesen. Dem Reaktor 2 werden dabei mittels der Einfüllvorrichtung 20 kontinuierlich etwa 130 g/min der Quarzkörnung 21 zugeführt und ebensoviel über den Entnahmestuten 24 kontinuierlich entnommen, so dass die Schüttmenge im Reaktor 2 etwa gleich bleibt. Die durchschnittliche Verweilzeit der Quarzkömung 21 im Reaktor 2 beträgt ca. 12 Stunden.

In einem separaten Verfahrensschritt wird die so gereinigte Quarzkörnung von Kohlenstoff- und Kohlenstoffverbindungen befreit, indem sie mit einem sauerstoffhaltigen Gas behandelt wird.

Trotz der relativ kurzen Behandlungsdauer von 12 Stunden ist bei der so behandelten Quarzkömung insbesondere der Gehalt an Alkali-Verunreinigungen deutlich gesunken. Die Verunreinigungs-Gehalte der gemäß Beispiel 2 gereinigten Quarzkörnung sind unter "Bsp. 2" in Tabelle 1 aufgeführt. Es wird noch einmal darauf hingewiesen, dass die Verunreinigungen der SiO₂-Kömung unterschiedliche Retentionszeiten haben, so dass die oben angegebenen Behandlungszeiten je nach spezifischer Reinheitsanforderung variieren. Beispielsweise wird eine Reinheitsanforderung in Bezug auf einen Natriumgehalt von weniger als 20 Gew.-ppb mit dem erfindungsgemäßen Verfahren nach Beispiel 2 bereits nach 60 Minuten erfüllt.

**Tabelle 1**

| | **Li** | **Na** | **K** | **Mg** | **Fe** | **Cu** | **Ni** | **Cr** | **Mn** | **Ba** | **V** | **Zr** | **Ca** | **Ti** | **Al** |
|---|---|---|---|---|---|---|---|---|---|---|---|---|---|---|---|
| **Standard** | 750 | 1.240 | 980 | 35 | 410 | 10 | 10 | 14 | 90 | 10 | 10 | 1.150 | 560 | 1.000 | 15.000 |
| Bsp.1 | < 3* | <10* | <10* | <5* | <10* | < 3* | < 1* | <1* | < 2* | <20* | <1* | <100 | 160 | 1.000 | 15.000 |
| Bsp. 2 | <100 | <20 | <50 | <20 | <60 | < 3* | <1* | < 1* | <10* | <20* | <1* | <100 | 300 | 1.000 | 15.000 |

Die Konzentrationsangaben in Tabelle 1 beziehen sich auf Gew.-ppb. Die Verunreinigungsgehalte wurden mittels ICP-OES gemessen; die mit * gekennzeichneten Werte mittels ICP-MS

## Patentansprüche

1. Verfahren zum Reinigen von SiO₂-Partikeln, indem eine Schüttung (4) der Partikel in einem Reaktor (2) mit vertikal orientierter Mittelachse (3) erhitzt und dabei einem chlorhaltigen Behandlungsgas ausgesetzt wird, das mit einer vorgegebenen Strömungsgeschwindigkeit von unten durch eine Gasdusche (5;23) hindurch nach oben durch den Reaktor (2) und die Schüttung (4) in Form eines laminaren Gasstromes geleitet wird und wobei eine Behandlungstemperatur von mindestens 1000°C eingestellt wird, **dadurch gekennzeichnet, dass** in einen aus Quarzglas bestehenden Reaktor (2) das Behandlungsgas mittels einer unterhalb der Schüttung (4) eine Vielzahl von lateral zur Mittelachse (3) verteilten Düsenöffnungen aufweisenden Gasdusche (5; 23) aus Quarzglas in die Schüttung (4) eingeleitet, die Strömungsgeschwindigkeit auf mindestens 10 cm/s eingestellt wird und die Partikel unter Luft- und Sauerstoffausschluß auf eine Temperatur im Bereich der Behandlungstemperatur erhitzt werden.

2. Verfahren nach Anspruch 1, **dadurch gekennzeichnet, dass** im Bereich der Schüttung (4) die Temperatur des Behandlungsgases auf mindestens 1200°C eingestellt wird.

3. Verfahren nach Anspruch 1 oder 2, **dadurch gekennzeichnet, dass** das Behandlungs gas die Schüttung (4) unter Erzeugung eines Fließbettes der Schüttung (4) anhebt.

4. Verfahren nach einem der Ansprüche 1 bis 3, **dadurch gekennzeichnet, dass** das Behandlungsgas vor Einleitung in die Schüttung (4) auf die Behandlungstemperatur erhitzt wird.

5. Verfahren nach einem der Ansprüche 1 bis 4 **dadurch gekennzeichnet, dass** das Behandlungsgas Chlorwasserstoffsäure enthält.

6. Verfahren nach einem der Ansprüche 1 bis 5, **dadurch gekennzeichnet, dass** das Behandlungsgas gleichzeitig zum Windsichten der Schüttung (4) eingesetzt wird.

7. Verfahren nach Anspruch 1, **gekennzeichnet durch** eine erste Reinigungsstufe zum Entfernen metallischer Verunreinigungen oder deren Verbindungen und **durch** eine zweite Reinigungsstufe zum Entfernen von Kohlenstoff- und Kohlenstoffverbindungen, wobei während der zweiten Reinigungsstufe dem Behandlungsgas ein sauerstoffhaltiges Gas zugeführt wird.

8. Verfahren nach einem der Ansprüche 1 bis 7, **dadurch gekennzeichnet, daß** das Behandlungsgas im Umlauf geführt wird.

9. Verfahren nach einem der Ansprüche 1 bis 8, **dadurch gekennzeichnet, daß** das Strömungsgeschwindigkeit des Behandlungsgases auf mindestens 30 cm/s eingestellt wird.

10. Vorrichtung zur Durchführung des erfindungsgemäßen Verfahrens, umfassend einen Reaktor (2) mit vertikal orientierter Mittelachse (3) für die Aufnahme einer Schüttung (4) der zu reinigenden SiO₂-Partikel, mit einer Gaszuführung für die Zufuhr eines Behandlungsgases in einen Bereich des Reaktors unterhalb der Schüttung (4) und mit einer Gasableitung für die Ableitung des Behandlungsgases aus einem Bereich des Reaktors oberhalb der Schüttung (4), **dadurch gekennzeichnet, dass** der Reaktor (2) aus Quarzglas besteht und allseitig geschlossen ist und dass die Gaszuführung eine Gasdusche (5; 23) aus Quarzglas umfaßt, die unterhalb der Schüttung (4) eine Vielzahl von lateral zur Mittelachse (3) verteilten Düsenöffnungen zur Einleitung des Behandlungsgases in die Schüttung (4) aufweist.

11. Vorrichtung nach Anspruch 10, **dadurch gekennzeichnet, dass** die Gaszuführung eine Gasaufheizvorrichtung umfaßt, die - in Strömungsrichtung des Behandlungsgases gesehen - vor der Gasdusche (5; 23) angeordnet ist.

12. Vorrichtung nach Anspruch 11, **dadurch gekennzeichnet, dass** die Gasaufheizvorrichtung eine beheizte Rohrwendel (7) umfaßt.

13. Vorrichtung nach einem der Ansprüche 10 bis 12, **dadurch gekennzeichnet, dass** die Gasdusche in Form eines mit den Düsenöffnungen versehenen Rohres (5; 23) ausgebildet ist.

14. Vorrichtung nach einem der Ansprüche 10 bis 13, **dadurch gekennzeichnet, dass** die Düsenöffnungen der Gasdusche (5; 23) symmetrisch um die Mittelachse (3) verteilt sind.

## Claims

1. A method for cleaning SiO₂ particles, by heating a fill (4) of the particles in a reactor (2) with a vertically oriented center axis (3) and at the same time exposing it to a chlorous treatment gas which is passed - at a specific flow velocity - from the bottom through a gas shower (5; 23) to the top through the reactor (2) and the fill (4) in the form of a laminar gas flow and with a treatment temperature of at least 1000°C being adjusted, **characterized in that** in a reactor (2) consisting of quartz glass, the treatment gas is introduced into the fill (4) by means of a gas shower (5; 23) made of quartz glass and having a multitude of nozzle openings below the fill (4) which are distributed laterally to the center axis (3), the flow velocity being adjusted to at least 10 cm/s and the particles being heated to a temperature in the area of the treatment temperature with the exclusion of air and oxygen.

2. A method according to Claim 1, **characterized in that** the temperature of the treatment gas is set to at least 1,200° C in the area of the fill (4).

3. A method according to Claim 1 or 2, **characterized in that** the treatment gas lifts up the fill (4) by forming a fluidized bed of the fill (4).

4. A method according to any one of Claims 1 to 3, **characterized in that** the treatment gas is heated to the treatment temperature prior to introducing it into the fill (4).

5. A method according to any one of the Claims 1 to 4, **characterized in that** the treatment gas contains hydrochloric acid.

6. A method according to any one of the Claims 1 to 5, **characterized in that** the treatment gas is simultaneously used for air sifting of the fill (4).

7. A method according to Claim 1, **characterized by** a first cleaning stage for the removal of metallic contaminations or their compounds and by a second cleaning stage for the removal of carbon and carbon compounds with an oxygen containing gas being introduced to the treatment gas during the second cleaning stage.

8. A method according to any one of the Claims 1 to 7, **characterized in that** the treatment gas is circulated.

9. A method according to any one of the Claims 1 to 8, **characterized in that** the flow velocity of the treatment gas is set to at least 30 cm/s.

10. A device for the implementation of the method according to the invention, comprising a reactor (2) with a vertically oriented center axis (3) for acceptance of a fill (4) of the SiO₂ particles to be cleaned; with a gas inlet for introducing a treatment gas in an area of the reactor below the fill (4) and with a gas outlet for discharging the treatment gas from an area of the reactor above the fill (4), **characterized in that** the reactor (2) consists of quartz glass and is closed all around and that the gas inlet comprises a gas shower (5; 23) of quartz glass which has - below the fill (4) - a multitude of nozzle openings distributed laterally to the center axis (3) for introducing the treatment gas into the fill (4).

11. A device according to Claim 10, **characterized in that** the gas inlet comprises a gas heating device which is arranged before the gas shower (5; 23) seen in the direction of flow of the treatment gas.

12. A device according to Claim 11, **characterized in that** the gas heating device comprises a heated tubular coil (7).

13. A device according to any one of the Claims 10 to 12, **characterized in that** the gas shower is designed in the form of a tube (5; 23) provided with the nozzle openings.

14. A device according to any one of the Claims 10 to 13, **characterized in that** the nozzle openings of the gas shower (5; 23) are distributed symmetrically about the center axis (3).

## Revendications

1. Procédé de purification de particules SiO₂, dans lequel une masse en vrac (4) des particules est chauffée dans un réacteur (2) avec un axe médian (3) orienté verticalement et elle est exposée à un gaz de traitement chloré qui est dirigé à une vitesse d'écoulement prédéterminée par le bas en traversant une douche de gaz (5; 23) vers le haut à travers le réacteur (2) et la masse en vrac ($) sous forme d'un courant de gaz laminaire, une température de traitement d'au moins 1000°C étant réglée, **caractérisé en ce que** dans un réacteur se composant de verre de quartz (2), le gaz de traitement étant introduit dans la masse en vrac (4) au moyen d'une douche de gaz (5, 23) présentant en dessous de la masse en vrac un grand nombre d'ouvertures de buse réparties latéralement à l'axe médian (3), la vitesse d'écoulement étant réglée à au moins 10 cm/s et les particules étant chauffées sous exclusion de l'air et de l'oxygène à une température comprise dans la température de traitement.

2. Procédé selon la revendication 1, **caractérisé en ce que** dans la zone de la masse en vrac (4), la température du gaz de traitement est réglée à au moins 1200°C.

3. Procédé selon la revendication 1 ou 2, **caractérisé en ce que** le gaz de traitement soulève la masse en vrac (4) en générant un lit fluidisé de la masse en vrac (4).

4. Procédé selon l'une des revendications 1 à 3, **caractérisé en ce que** le gaz de traitement est chauffé à la température de traitement avant l'incorporation dans la masse en vrac (4).

5. Procédé selon l'une des revendications 1 à 4, **caractérisé en ce que** le gaz de traitement contient de l'acide chlorhydrique.

6. Procédé selon l'une des revendications 1 à 4, **caractérisé en ce que** le gaz de traitement est utilisé en même temps pour le criblage de la masse en vrac (4).

7. Procédé selon la revendication 1, **caractérisé par** un premier niveau de purification pour le retrait d'impuretés métalliques ou leurs composés et par un second niveau de purification pour le retrait de carbone et de composés de carbone, pendant le second niveau de nettoyage, le gaz de traitement étant amené à un gaz contenant de l'oxygène.

8. Procédé selon l'une des revendications 1 à 7, **caractérisé en ce que** le gaz de traitement est guidé en circulation.

9. Procédé selon l'une des revendications 1 à 8, **caractérisé en ce que** la vitesse d'écoulement du gaz de traitement est réglée à au moins 30 cm/s.

10. Dispositif pour la mise en oeuvre du procédé conforme à l'invention, comprenant un réacteur (2) avec un axe médian orienté verticalement (3) pour la réception d'une masse en vrac (4) des particules Si02 à purifier, avec une amenée de gaz pour l'amenée d'un gaz de traitement dans une zone du réacteur en dessous de la masse en vrac (4) et avec une conduite d'évacuation de gaz pour l'évacuation du gaz de traitement hors d'une zone du réacteur au-dessus de la masse en vrac (4), **caractérisé en ce que** le réacteur (2) se compose de verre de quartz et est fermé de part et d'autre et **en ce que** l'amenée de gaz comprend une douche à gaz (5; 23) en verre de quartz qui présente en dessous de la masse en vrac un grand nombre d'ouverture de buses réparties latéralement à 1 'axe médian (3) pour l'introduction du gaz de traitement dans la masse en vrac (4).

11. Procédé selon la revendication 10, **caractérisé en ce que** l'amenée de gaz comprend un dispositif de chauffage de gaz qui est disposé - vu dans le sens de l'écoulement du gaz de traitement - devant la douche à gaz (5 , 23).

12. Dispositif selon la revendication 11, **caractérisé en ce que** le dispositif de chauffage de gaz comprend une spirale tubulaire chauffée (7).

13. Dispositif selon l'une des revendications 10 à 12, **caractérisé en ce que** la douche de gaz est réalisée sous forme d'un tube (5 ; 23) muni des ouvertures de buses.

14. Dispositif selon l'une des revendications 10 à 13, **caractérisé en ce que** les ouvertures de buses de la douche à gaz (5; 23) sont réparties symétriquement autour de l'axe médian (3).
